**Europäisches Patentamt**

**European Patent Office**

**Office européen des brevets**

(19)

(11) Veröffentlichungsnummer : **0 012 929**
**B1**

(12) **EUROPÄISCHE PATENTSCHRIFT**

(45) Veröffentlichungstag der Patentschrift :
26.01.83

(21) Anmeldenummer : 79105098.2

(22) Anmeldetag : 12.12.79

(51) Int. Cl.³ : **C 08 J 9/30, B 32 B 25/10,**
**D 06 N 7/00, C 08 L 21/02**

(54) Verfahren zur Herstellung eines textilen Laminats.

(30) Priorität : 14.12.78 US 969440

(43) Veröffentlichungstag der Anmeldung :
09.07.80 Patentblatt 80/14

(45) Bekanntmachung des Hinweises auf die Patenterteilung : 26.01.83 Patentblatt 83/04

(84) Benannte Vertragsstaaten :
AT BE CH DE FR IT NL

(56) Entgegenhaltungen :
CH D 152 066
DE A 2 549 806
FR A 1 001 822
US A 3 657 175
US A 4 049 587

(73) Patentinhaber : **Reichhold Chemicals, Inc.**
**RCI Building**
**White Plains, N.Y. 10603 (US)**

(72) Erfinder : **Mervin, Gaillard**
**241 Suburban Avenue N.E.**
**Concord North Carolina (US)**

(74) Vertreter : **Fischer, Ernst, Dr.**
**Reuterweg 14**
**D-6000 Frankfurt am Main 1 (DE)**

## Verfahren zur Herstellung eines textilen Laminats

Die Erfindung betrifft ein Verfahren zur Herstellung einer verbesserten geschäumten wäßrigen Gewebebeschichtungsmischung aus einer wäßrigen Mischung niedriger Viskosität, enthaltend einen Latex oder eine Dispersion eines Polymerisats oder eines Copolymerisats. Insbesondere betrifft die Erfindung ein Verfahren zur kontinuierlichen Herstellung einer hochviskosen geschäumten Beschichtungsmischung, die für Zwecke der kontinuierlichen Beschichtung von Teppichen und anderen Gewebesubstraten geeignet ist und auf die nachfolgend eine zweite Gewebeschicht laminiert werden kann. In diesem Verfahren wird eine wäßrige polymere Verdicker-Emulsion in eine Vorrichtung eingespritzt, worin der Mischvorgang kontinuierlich unter Zufuhr einer niedrig viskosen wäßrigen polymeren Mischung abläuft. Dabei wird Luft in solcher Weise eingeführt, daß eine hochviskose geschäumte Beschichtungsmischung entsteht. Die Erfindung betrifft ferner die Schaffung der Mittel, um die Viskosität der geschäumten Beschichtungsmischung einzustellen, die durch Änderung der Einspritzmenge der polymeren Verdicker-Emulsion im Verhältnis zur Menge der zugeführten niedrig viskosen polymeren Mischung kontinuierlich bewirkt wird. Auf diese Weise wird eine kontinuierliche Herstellung einer hochviskosen geschäumten Mischung ermöglicht, deren Viskosität nach Belieben ohne Unterbrechung des Verfahrens verändert und kontrolliert werden kann. Dies gelingt unter Verwendung einer niedrig viskosen polymeren Mischung, die in ihrer Zusammensetzung während des Beschichtungsverfahrens unverändert bleibt.

Es ist bekannt, eine Gewebebeschichtungsmischung unter Verwendung einer geschäumten Mischung für Teppichbeschichtung herzustellen. Dieses Verfahren wird als Einstufenprozeß durchgeführt und umfaßt die Bildung einer niedrig viskosen wäßrigen Mischung, enthaltend Latex oder eine Dispersion eines Polymerisats oder Copolymerisats und das Zumischen einer großen Zahl weiterer Ingredienzen, wie anorganische Füllstoffe und Pigmente, organische Polymerisate in fein verteilter Form, wie Stärke und Polyvinylchlorid, flüssige Öle und Plastifizierungsmittel, Antioxidantien und Biozide, wäßrige oberflächenaktive Mittel einschließlich Dispergierungsmittel und Schaummittel usw. Eine solche Mischung wird üblicherweise stufenweise als Ansatz hergestellt, wobei ein oder mehrere Verdickungsmittel in einer oder mehreren Stufen des Prozesses nacheinander zugefügt werden. Die endgültige Verdickung findet in einem Mischkessel statt, der gleich oder verschieden von dem sein kann, in welchem die niedrig viskose polymere Mischung hergestellt wurde. Im Falle eines Auftrags der Mischung auf ein Gewebesubstrat in der Form von Schaum wird nach dem letzten Zusatz des Verdickungsmittels die Mischung dann durch eine Rohrleitung zu der Verschäumungseinrichtung geführt, von hier zu der Beschichtungsvorrichtung.

Die in den vorbekannten Verfahren verwendeten Verdickungsmittel sind hydrophile Polymerisate oder Copolymerisate hohen Molekulargewichts, entweder in der Form einer Lösung oder in einer anderen Form einer kolloidalen Dispersion, die eine hohe Viskosität besitzen, oder in der Form von relativ geringer viskosen Emulsion oder Dispersion, enthaltend diskrete Teilchen von Polymerisaten oder Copolymerisaten. Wie auch immer die Natur oder der physikalische Zustand des Verdickungsmittels sein mag, die Viskosität der wäßrigen polymeren Mischung wird angehoben bei dem Mischen mit dem Verdickungsmittel, wenn nötig erleichtert durch Einstellung des pH-Werts der Mischung.

In der Verschäumungseinrichtung wird die verdickte polymere Mischung heftig mit Luft bei hoher Mischgeschwindigkeit gemischt. Die aufgeschäumte Beschichtungsmischung wird dann kontinuierlich zu der Beschichtungseinrichtung geführt, die üblicherweise nahe bei der Verschäumvorrichtung aufgestellt ist.

Die Fähigkeit der geschäumten Beschichtungsmischung in wirkungsvoller Weise die Erfordernisse des Beschichtungsvorganges im Hinblick auf ein besonderes Gewebesubstrat zu treffen, hängt von einer Vielzahl von Eigenschaften ab, unter welchen die Schaumviskosität, seine Stabilität und die Größe der Luftblasen zu nennen sind. Diese Eigenschaften stehen in Beziehung zur Viskosität der verdickten Mischung vor dem Schaumvorgang, welche wiederum abhängt von der Menge und der Natur des Verdickungsmittels oder der Verdickungsmittel, die dem einzelnen Ansatz der polymeren Mischung niedriger Viskosität während den Verdickungsstufen zugesetzt wurden. In dem vorbekannten Verfahren ist eine obere Grenze für die Viskosität der verdickten wäßrigen Mischung gegeben, welche zu der Schaumvorrichtung geleitet werden muß. Diese Grenze wird bestimmt durch die Notwendigkeit einer ausreichenden Fließgeschwindigkeit durch die Verbindungsleitungen. Diese können recht lang sein aufgrund der Notwendigkeit, den Kessel, in welchem die letzte Verdickungsstufe ausgeführt wird, in ziemlicher Entfernung von der Beschichtungsvorrichtung aufzustellen.

Es ist ferner festzuhalten, daß im vorbekannten Verfahren es üblich ist, die verdickte Latex-Mischung auch als Ansatz vor der Verschäumung herzustellen, d.h. der letzte Verdickungsvorgang wird in jedem Ansatz der Mischung niedriger Viskosität als letzte Stufe vorgenommen. Natur und Eigenschaft des zuletzt zugegebenen Verdickungsmittels muß im voraus für jeden einzelnen Ansatz bestimmt und sorgfältig kontrolliert werden, um zu gewährleisten, daß die Viskosität der Mischung sowohl vor als auch nach dem Schaumvorgang einen Wert innerhalb des vorbestimmten Bereichs erreicht, welcher Bereich sehr eng sein kann.

Wenn eine Veränderung im Aufbau des Substrates auftritt oder andere Veränderungen in den Beschichtungsbedingungen auftreten, die eine Veränderung der Schaumviskosität für die Fortsetzung einer wirksamen Arbeitsweise erforderlich machen, dann muß der Vorgang angehalten werden, bis ein anderer Ansatz der Beschichtungsmischung hoher Viskosität hergestellt ist oder verfügbar ist, wobei diese frischen Ansätze eine Viskosität aufweisen, die geeigneter für die veränderten Bedingungen ist. Auf diese Weise werden Verzögerungen geschaffen, die in einem Produktionsverlust und in bestimmten Mengen Ausschuß an Teppichware bestehen, oder es werden andere Gewebe hergestellt, bevor der Wechsel der Schaummischung vollzogen werden kann.

In der vorliegenden Erfindung werden die Nachteile vorbekannter Verfahren überwunden. Es wird eine geschäumte Beschichtungsmischung mit einer höheren Viskosität als die in Mischungen der vorbekannten Art hergestellt und deren Schaumviskosität wird nach Belieben eingestellt. Das erfindungsgemäße Verfahren gestattet das ununterbrochene Beschichten von Substraten, welche verschiedene Schaumviskositäten erfordern können, unter Verwendung einer Polymermischung niedriger Viskosität, die während der gesamten Beschichtungsoperation unverändert bleibt.

Nach dem Verfahren der vorliegenden Erfindung wird eine niedrig viskose polymere Zusammensetzung, deren Viskosität für die Herstellung der gewünschten Schaumviskosität ungenügend ist, durch ein Rohrsystem zu der Mischvorrichtung geleitet, wo sie mit Luft gemischt wird mittels einer hohen Mischgeschwindigkeit. Während die belüftete Mischung kontinuierlich durch die Mischvorrichtung fließt, wird eine Emulsion eines polymeren Verdickers kontinuierlich in die Mischung in geregelter Menge eingespritzt. Die Wirkung der hohen Mischgeschwindigkeit besteht darin, daß unverzüglich eine Dispergierung und innige Mischung der Verdicker-Emulsion innerhalb der wäßrigen Mischung stattfindet, die in einer schnellen und gleichmäßigen Verteilung des Verdickers besteht. Die Viskosität der geschäumten Mischung wird hierdurch erhöht, wenn sie durch die Mischapparatur geführt wird. Der erhaltene Schaum weist kleine Blasen von gleichmäßiger Größe auf. Als Folge der Leichtigkeit des Zusatzes höherer Mengen Verdickers als im vorbekannten Verfahren, und ferner der Leichtigkeit, den Verdicker schnell und gleichmäßig unter hohen Scherbedingungen zu dispergieren, können geschäumte Beschichtungsmischungen mit größerer Wirksamkeit hergestellt werden.

Die Viskosität der erfindungsgemäß hergestellten geschäumten Mischung kann schnell eingestellt und kontrolliert werden, um den gewünschten Grad der Durchdringung durch die Mischung in die Spalten und Vertiefungen des Gewebesubstrats während der Beschichtungsoperation vorzusehen und um eine wirksamere Beschichtung zu erzielen als sie mittels der Maßnahmen der vorbekannten Verfahren erreicht werden, sogar wenn die Auftragsmenge der geschäumten Mischung auf das Gewebesubstrat reduziert wird.

Weitere erreichbare Vorteile des erfindungsgemäßen Verfahrens sind folgende :

1. Durch geeignete Auswahl der verwendeten Verdicker-Emulsion werden kleiner Mengen des Schaummittels für die Stabilisierung des Schaums benötigt.

2. Die polymere Mischung niedriger Viskosität kann mit einem höheren Feststoffgehalt als in bekannten Verfahren hergestellt werden, wobei sie noch genügend flüssig ist, um zu dem Mischkopf gepumpt zu werden, in welchem der Schäumvorgang und die Einspritzung der Verdicker-Emulsion stattfindet.

3. Es können schnellere Beschichtungsgeschwindigkeiten und ein geringerer Energieaufwand realisiert werden, wenn die Menge des Gewebeauftrags reduziert wird.

4. Es tritt eine Zeitersparnis für die Herstellung der Beschichtungsmischung ein.

5. Es kann eine beständigere Schaumviskosität während einer verlängerten Beschichtungszeit erreicht werden, die in einer Gleichmäßigkeit des Beschichtungsauftrags des Schaumes auf die Oberfläche des Substrats und seiner Durchdringung resultiert.

6. Aus der besseren Kontrolle des Durchdringungsgrades des Schaumes resultiert eine verbesserte Adhäsion des zweiten Gewebes, welches auf das Substratgewebe mittels der Mischungsschicht kaschiert wird.

7. Dank der höheren Schaumstabilität kann eine verbesserte Gleichmäßigkeit der Auftragsmenge des Schaums auf das Substrat durch eine Auftragswalze ermöglicht werden.

Im folgenden wird eine Ausführungsform des erfindungsgemäßen Verfahrens anhand des Diagramms beschrieben. Dieses zeigt eine schematische Darstellung einer Ausrüstung, die für die Bildung einer hochviskosen geschäumten Beschichtungsmischung, Auftragen der geschäumten Mischung auf die Oberfläche des Gewebesubstrates und Kaschieren eines zweiten Geweberückens auf das Substrat verwendet werden kann.

Ein kaschierter Tuftingteppich ist ein typisches Beispiel eines Gewebes, welches nach dem erfindungsgemäßen Verfahren hergestellt werden kann. Bei einem solchen Gewebeaufbau dient die polymere Mischung, die in Form des Schaumes aufgetragen wird, sowohl der Fixierung der Büschel (tufts) in den ersten Rücken als auch der Verstärkung der Haftung des zweiten Rückens auf dem ersten Gewebe. Die Möglichkeit, eine polymere Mischung in der Form eines hochviskosen Schaumes aufzutragen zusammen mit der Möglichkeit, schnell die Viskosität des Schaumes zu kontrollieren, ist insbesondere bei der wirkungsvollen Herstellung eines solchen Teppichs wünschenswert.

Die Vorrichtung umfaßt einen Vorratstank 12, der eine niedrig viskose polymere Mischung etwa folgender Zusammensetzung enthält : Latex eines Copolymerisates und einen anorganischen Füllstoff, jedoch einen ungenügenden Verdickergehalt für die Schaumbeschichtung, pH-Wert der Mischung im

3

alkalischen Bereich. Eine Förderleitung 14 ist mit der Eingangsseite einer Pumpe 16 verbunden, die die polymere Mischung zu einem Mischventil 18 führt, wo diese mit Preßluft gemischt wird, welche aus einem Kompressor 20 über die Leitung 22 eingedüst wird.

Vom Mischventil 18 aus wird die belüftete Mischung durch Rohrleitung 24 zur Mischapparatur 26 geführt, worin die Mischung einer hohen Mischgeschwindigkeit unterzogen wird.

Ein zweiter Vorratstank 30 enthält eine Verdicker-Emulsion, welche ein Latex eines Copolymerisat einer ungesättigten Carbonsäure ist. Dieser Tank ist über Rohrleitung 34 und ein Steuerventil 32 mit der Eingangsseite einer Verdrängerpumpe 36 verbunden. Diese Pumpe ist mit einer Kontrollvorrichtung 37 ausgerüstet, die den Kolbenhub einstellt und dadurch die Menge der Verdicker-Emulsion regelt, die durch Leitung 38 zur Düse 40 gepumpt wird. Diese Düse ist in der seitlichen Wand der Mischvorrichtung 26 angebracht, so daß die Verdicker-Emulsion im rechten Winkel zur Richtung der Fließgeschwindigkeit der wäßrigen Mischung eingespritzt wird. Die Größe der Öffnung der Düse 40 ist so, daß eine wirksame Mischung stattfindet.

Jede stoßweise Einspritzung der Verdicker-Emulsion in die Mischvorrichtung, durch welche die belüftete wäßrige Mischung bei alkalischem pH-Wert kontinuierlich fließt, wird unverzüglich durch die hohe Mischgeschwindigkeit verteilt. Die Viskosität der geschäumtem Mischung steigt an und die homogene geschäumte Mischung fließt kontinuierlich aus der Mischvorrichtung zu der Beschichtungsvorrichtung.

Es kann erforderlich sein, die Beschichtungsvorrichtung und die Schaumvorrichtung in einigem Abstand von dem Vorratstank 12 zur Aufstellung zu bringen, in welchem Falle das Verfahren der Einspritzung des Verdickers in die Schaumapparatur besondere Vorteile aufweist.

Die geschäumte Mischung wird in die Wanne 44 über die Rohrleitung 42 eingebracht. Ein kontinuierliches Gewebe eines Gewebesubstrats 48 passiert die Auftragswalze 46, die eine Schaumbeschichtung auf das Gewebesubstrat aufbringt. Ein Abstreifmesser 49 reguliert die Menge des Auftrags durch Abstreifen des Überschusses an geschäumter Mischung.

Ein zweiter Geweberücken 50 wird kontinuierlich über die Führungsrolle 52 zugeführt und mit der beschichteten Seite des Gewebesubstrats 48 zusammengebracht zwischen den Andruckwalzen 54. Das Gewebesubstrat 48 und der zweite Rücken 50 werden zusammengepreßt und zusammengehalten durch die Schicht der noch nassen Beschichtungsmischung. Das Laminat durchläuft dann der Trockner 56, wo die polymere Mischung getrocknet wird durch Erhitzen auf eine Temperatur, die ausreicht, um den gewünschten Grad der Haftung zu erzielen. Das fertige Laminat wird über die Rollen 58 aufgerollt.

Beispiele von wäßrigen Latices und Dispersionen, die nach dem erfindungsgemäßen Verfahren verwendet werden können, um hochviskose geschäumte Beschichtungsmischungen herzustellen, schließen solche Mischungen ein, die elastomere oder flexible Copolymerisate enthalten, in welchen das Copolymerisat polare oder reaktive Gruppen in der Kette enthält. Solche Gruppen verstärken die Entwicklung optimaler physikalischer Eigenschaften nach dem Trocknen der Mischung ohne die Notwendigkeit eines Zusatzes externer Vernetzungsmittel. Die Möglichkeit des Zusatzes externer Vernetzer ist jedoch nicht ausgeschlossen. Derartige Copolymerisate können hergestellt werden durch Copolymerisation in Emulsion von Butadien, zusammen mit wenigstens einem äthylenisch ungesättigten polaren Monomeren, wie alpha, beta-ungesättigten Mono- oder Dicarbonsäure, Acrylamid oder N-methylolacrylamid, Hydroxyalkylacrylate oder Methacrylate. Üblicherweise werden diese zusammen mit wenigstens einem weiteren copolysierbaren Monomeren verwendet, wie Styrol, alpha-Methylstyrol, Acrylnitril, Methylmethacrylat, Vinylidenchlorid, beispielsweise wässriges Butadien/Styrol-Copolymerisat mit einer Viskosität von 1,0 bis 12,0 Pa · s. Es können auch Latices anderer flexibler Polymerisate und Copolymerisate verwendet werden, die keine copolymerisierten Butadieneinheiten enthalten und die abgeleitet sind von einem oder mehreren Monomeren und charakterisiert durch die Ester von Acrylsäure und Methacrylsäure, Styrol, Acrylnitril, Vinylchlorid, Vinylidenchlorid, Vinylacetat, Vinylpropionat und andere Vinylester von Carbonsäuren, Äthylen, Isobutylen. Copolymerisierte Einheiten polarer Monomeren wie jene beispielhaft aufgeführten, können ebenfalls anwesend sein.

Zusätzlich zu diesen und anderen Latices und Dispersionen von Polymerisaten und Copolymerisaten, hergestellt durch Emulsionpolymerisation, können andere wäßrige Latices und Dispersionen verwendet werden, die nicht durch Emulsionspolymerisation hergestellt sind, beispielsweise natürliche Kautschuklatices, Latices hergestellt durch Dispergierung fester Polymerisate in Wasser mittels Mahlvorgängen, Schmelzvorgängen usw., Latices hergestellt durch Emulgieren von Lösungen von Polymerisaten in organischen Lösungsmitteln mit nachfolgender Verdampfung des Lösungsmittels usw. Es können Mischungen von verschiedenen Latices und wäßrigen Dispersionen der Polymerisate und Copolymerisate verwendet werden, die wenigstens ein elastomeres oder flexibles Polymerisat oder Copolymerisat enthalten.

Die in dem erfindungsgemäßen Verfahren verwendeten Verdicker-Emulsionen sind solche, die eine relativ niedrige Viskosität bei pH-Werten von weniger als etwa 7 besitzen, und die schnell in der Viskosität ansteigen, wenn sie in Wasser bei einem pH-Wert größer als etwa 7 dispergiert werden, was typisch für die Ionisation der Carbonsäuregruppe ist. Bei pH-Werten oberhalb 7 bilden sie in Wasser hochviskose kolloidale Lösungen oder Dispersionen. Wenn sie in eine polymere Mischung niedriger Viskosität eingespritzt werden, soll die letztere einen pH-Wert wünschenswerterweise im Bereich von etwa 7,5 bis etwa 10 haben. Die Wirkung der unmittelbar in das alkalische Milieu eintretenden Verdicker-Emulsion ist ein unverzügliches Ansteigen der Viskosität der Mischung innerhalb der Verschäumungseinrichtung. Es wird nicht ausgeschlossen, daß eine basische Substanz auch gleichzeitig in die Verschäumungsreinrichtung eingespritzt werden kann, um den pH-Wert einzustellen.

Geeignete Verdicker-Emulsionen können hergestellt werden durch Emulsionspolymerisation von äthylenisch ungesättigten Carbonsäuren mit anderen Monomeren, wie sie beispielsweise in den US-Patenten 3 366 584 3 657 175 beschrieben sind.

Anorganische Füllstoffe, die in der nach dem erfindungsgemäßen Verfahren hergestellten geschäumten Beschichtungsmischung anwesend sein können, sind beispielsweise fein verteiltes Calcium-carbonat, Baryt, Aluminiumoxid, Ton, anorganische Pigmente. Stärke kann anwesend sein. Diese Füllstoffe und andere Zusatzstoffe können in einer Menge bis zu 800 Teilen pro 100 Gewichtsteile des Polymerisats oder Copolymerisats, enthalten in der polymeren Mischung niedriger Viskosität, enthalten sein. Der Feststoffgehalt der hochviskosen geschäumten Beschichtungsmischung kann beispielsweise im Bereich von 76 bis 86 Gew.-% liegen.

Die Erfindung wird nachfolgend in den Beispielen näher und beispielhaft erläutert.

## Beispiel 1

Es wurde eine niedrig viskose polymere Mischung mit einem hohen Feststoffgehalt hergestellt, enthaltend einen Latex eines Copolymerisats von Butadien, Styrol und einer ungesättigten Carbonsäure zusammen mit einem anorganischen Füllstoff. Diese Mischung ist typisch für jene, die im Stand der Technik für die Herstellung von getufteten Teppichen unter Auftrag einer geschäumten Mischung vor der Kaschierung eines zweiten Rückens verwendet werden.

Die niedrig viskose Mischung hatte eine Viskosität von 8 Pa · s und zeigte einen alkalischen pH-Wert. Sie wurde kontinuierlich durch eine Vorrichtung mit hoher Mischgeschwindigkeit geschickt, in welche eine Verdicker-Emulsion mit einer bestimmten Geschwindigkeit eingespritzt wurde. Die Verdicker-Emulsion enthielt ein carboxyliertes Emulsionspolymerisat mit einem sauren pH-Wert.

Die die Mischapparatur verlassende geschäumte Mischung hatte eine Viskosität von 12 Pa · s und eine Dichte von 1 004 g/l. Diese Schaumviskosität ist annehmbar für die Beschichtung der Schlingenverankerung eines handelsüblichen getufteten Teppichs und bewirkt eine gute Durchdringung des Gewebesubstrats, die sich in Noppenfestigkeit und in Widerstand gegen Ausfasern äußert.

Unter Verwendung der gleichen Mischung niedriger Viskosität wurde durch Erhöhung der Geschwindigkeit des Einspritzens der Verdicker-Emulsion die Viskosität der geschäumten Mischung schnell auf 20 Pa · s geändert. Diese geschäumte Mischung wurde auf einen Langflorteppich aufgebracht, wobei eine sehr leichte Durchdringung des Substrats resultierte und ein geringes Beschichtungsgewicht pro Oberflächeneinheit erreicht wurde.

## Beispiel 2

Es wurde eine niedrig viskose Mischung hergestellt, enthaltend einen Latex eines Butadien-Styrol-Carbonsäure-Copolymerisats sowie einen anorganischen Füllstoff mit einem Feststoffgehalt von 82,5 Gew.-%. Die Mischung hatte eine Viskosität von 7 bis 7,5 Pa · s. Die in die Mischvorrichtung eingespritzte Verdicker-Emulsion hatte einen Feststoffgehalt von 9 Gew.-% und hatte einen sauren pH-Wert.

Als Vergleichsversuch wurde eine geschäumte Beschichtungsmischung hergestellt nach Verfahren des Standes der Technik, in dem das Verdickungsmittel vor dem Schäumvorgang zugesetzt wurde. Folgende Werte wurden erhalten :

| | Viskosität vor Verschäumung Pa · s | Schaum-dichte g/l | Schaum-viskosität Pa · s |
|---|---|---|---|
| Vergleichsversuch nach Stand der Technik | 18 | 1 151 | 18 |
| Verdicker Einspritzverfahren | 7-7,5 | 1 096-1 101* | 17,5-22* |

* Entsprechend der Zusatzmenge der Verdicker-Emulsion.

Unter Verwendung der gemäss Stand der Technik geschäumten Vergleichsmischung sowie einer nach dem erfindungsgemäßen Verfahren hergestellten Mischung mit einer Schaumviskosität von 22 Pa · s wurden jeweils drei Beschichtungen auf einem Langflorteppich vorgenommen, der mit einem zweiten Gewebe kaschiert wurde.

5

Die erhaltenen Werte sind in der Tabelle aufgeführt. Die Bindungsstärke (T-Peel Bond Strength) wurde nach dem Testverfahren ASTM D-2 724, und die Noppenfestigkeit gemäß ASTM D-1 335 vorgenommen. Die Testergebnisse sind in metrische Einheiten umgerechnet.

Tabelle

| Teppich-Probe | 1 | 2 | 3 | Mittel-wert |
|---|---|---|---|---|
| A. Bindungsstärke | | | | |
| kg/7,62 cm Streifenbreite | | | | |
| Vor der Verschäumung | | | | |
| zugesetzter Verdicker | 5,8* | 7,0* | 5,5* | 6,1 |
| Eingespritzter Verdicker | 8,8 | 7,0 | 6,6 | 7,1 |
| | 6,2 | 6,9 | 6,4 | |
| | 6,5 | 8,2 | | |
| B. Noppenfestigkeit | | | | |
| kg/Schlinge | | | | |
| Vor der Verschäumung | | | | |
| zugesetzter Verdicker | 8,1* | 3,5* | 7,5* | 6,4 |
| Eingespritzter Verdicker | 9,5 | 3,5 | 7,1 | 6,6 |
| | 8,4 | 4,1 | 7,0 | |
| | 9,4 | 3,9 | | |
| C. Gewicht der Beschichtung | | | | |
| auf dem Teppich kg/m² | | | | |
| Vor der Verschäumung | | | | |
| zugesetzter Verdicker | 1,19 | 1,08 | 1,15 | 1,14 |
| Eingespritzter Verdicker | 1,14 | 1,01 | 1,13 | 1,12 |
| | 1,21 | 1,02 | 1,13 | |
| | 1,19 | | | |

* Mittelwerte von 3 Teppichproben

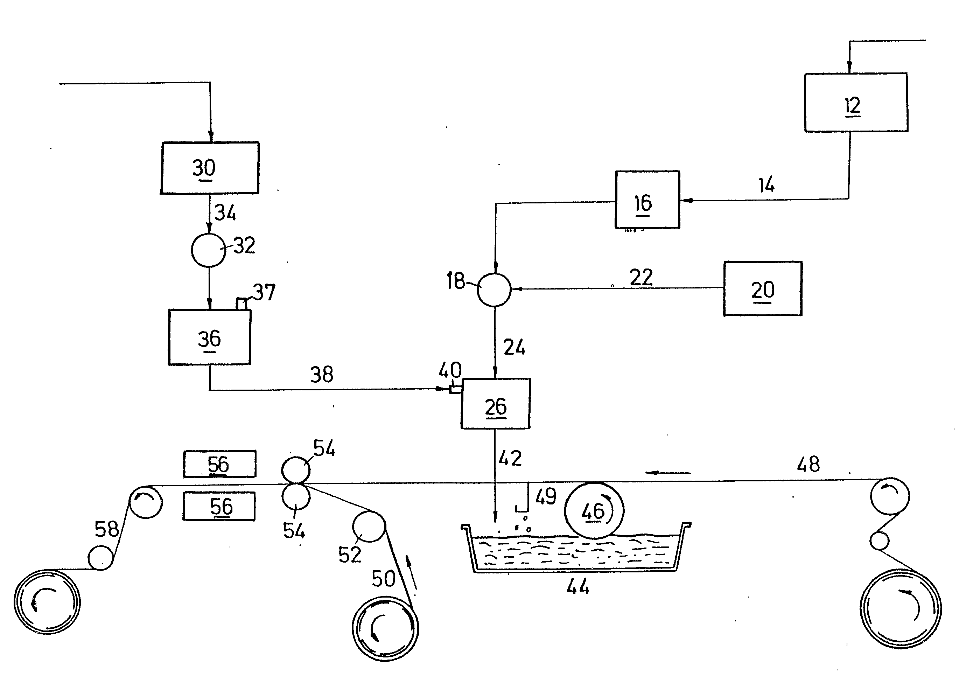

## Ansprüche

1. Verfahren zur Herstellung eines Textil-Laminats, wobei eine geschäumte Mischung eines Latex oder einer Dispersion eines Polymerisats oder Copolymerisats, die Verdickungsmittel gegebenenfalls neben üblichen Füll- und Zusatzstoffen enthält, auf die Oberfläche eines textilen Substrats aufgetragen wird, dadurch gekennzeichnet, daß luft und eine niedrig viskose Mischung, enthaltend einen Latex oder eine Dispersion eines natürlichen oder synthetischen Polymerisats oder Copolymerisats sowie gegebenenfalls weitere Zusatzstoffe, in eine Zone hoher Mischgeschwindigkeit unter Aufschäumung der Mischung mit Luft eingeführt werden, und eine Emulsion eines polymeren Verdickers unter Erhöhung der Viskosität der niedrig viskosen Mischung in die Mischzone in geregelter Menge eingespritzt und die erhöhte Viskosität des gebildeten, die Mischzone verlassenden Schaumes kontrolliert und der erhaltene Schaum auf eine Seite eines Gewebesubstrats aufgetragen wird, welches nachfolgend mit einer weiteren Schicht eines Gewebematerials unter Verwendung der Mischung laminiert wird.

2. Verfahren nach Anspruch 1, dadurch gekennzeichnet, daß die Einspritzmenge der Verdicker-Emulsion in die Mischzone während des Verfahrens variiert wird, um die Viskosität des erhaltenen Schaumes zu verändern.

3. Verfahren nach den Ansprüchen 1 bis 2, dadurch gekennzeichnet, daß als Mischung niedriger Viskosität ein wäßriger Latex eines elastomeren oder flexiblen Copolymerisats mit polaren oder reaktiven Gruppen in der Polymerkette verwendet wird.

4. Verfahren nach den Ansprüchen 1 bis 3, dadurch gekennzeichnet, daß als Verdicker-Emulsion eine, bei einem pH-Wert von Kleiner als 7, relativ niedrige Viskosität aufweisende Verdicker-Emulsion verwendet wird, deren Viskosität rasch bei über pH 7 steigenden Werten zunimmt.

5. Verfahren nach den Ansprüchen 1 bis 4, dadurch gekennzeichnet, daß eine Mischung niedriger Viskosität in einem pH-Bereich von 7,5 bis 10,5 verwendet wird.

6. Verfahren nach den Ansprüchen 1 bis 5, dadurch gekennzeichnet, daß als Mischung niedriger Viskosität ein wäßriges Butadien/Styrol-Copolymerisat mit einer Viskosität von 1,0 bis 12,0 Pa · s verwendet wird.

7. Verfahren nach den Ansprüchen 1 bis 6, dadurch gekennzeichnet, daß als Verdicker-Emulsion ein Latex eines Copolymerisats einer ungesättigten Carbonsäure mit anderen copolymerisierbaren Monomeren verwendet wird.

8. Verfahren nach den Ansprüchen 1 bis 7, dadurch gekennzeichnet, daß die Mischung niedriger Viskosität Füllstoff und/oder Extender in einer Menge von bis zu 800 Gewichts-Teilen pro 100 Gew.-% Teile Polymerisat oder Copolymerisat (auf Trocksubstanz bezogen) enthält.

9. Verfahren nach Anspruch 8, dadurch gekennzeichnet, daß die Mischung niedriger Viskosität 76 bis 86 Gew.-% Feststoff (auf Trockensubstanz bezogen) enthält.

10. Verfahren nach den Ansprüchen 1 bis 9, dadurch gekennzeichnet, daß als Gewebesubstrat ein getufteter Teppich und als weitere Gewebeschicht eine zweite Rückenschicht verwendet wird.

## Claims

1. A process for producing a textile laminate, wherein a foamed mixture of a latex or dispersion of a polymer or copolymer, containing thickener agents and optionally usual fillers and additives is applied to the surface of a textile substrate, characterized in that air and a low viscosity aqueous composition containing a latex or dispersion of a natural or synthetic polymer or copolymer and optionally other ingredients are fed into a high speed mixing zone in which said composition is frothed by admixture with said air, and wherein a polymeric thickener emulsion for increasing the viscosity of said low viscosity composition is injected into said mixing zone in order to increase the viscosity of the resulting froth, the thickener emulsion being injected at a metered rate in order to control the viscosity of the froth leaving the mixing zone and wherein the resulting froth is applied to one side of a fabric substrate which is thereafter laminated to another layer of fabric material using said composition.

2. A process as claimed in claim 1, characterized in that the rate of injection of the thickener emulsion into the mixing zone is varied during operation of the process in order to vary the viscosity of the resulting froth.

3. A process as claimed in claim 1 or 2, characterized in that low viscosity composition comprises an aqueous latex of an elastomeric or flexible copolymer containing polar or reactive groups pendant from the polymer chain.

4. A process as claimed in any one of claims 1 to 3, characterized in that the thickener emulsion is one which exhibits a relatively low viscosity at a pH value less than 7, which viscosity increases rapidly when the pH is raised above 7.

5. A process as claimed in any one of claims 1 to 4, characterized in that the low viscosity composition has a pH in the range of 7.5 to 10.5.

6. A process as claimed in any one of claims 1 to 5, characterized in that the low viscosity composition comprises an aqueous butadiene-styrene copolymer and has a viscosity of from 1.0 to 12.0 Pa · s.

7. A process as claimed in any one of claims 1 to 6, characterized in that the thickener emulsion comprises a latex of a copolymer of an unsaturated carboxylic acid with further copolymerisable monomer.

8. A process as claimed in any one of claims 1 to 7, characterized in that the low viscosity composition comprises a filler and/or extender in an amount of up to 800 parts by weight per 100 parts by weight of polymer or copolymer on a dry basis.

9. A process as claimed in. claim 8, characterized in that the low viscosity composition comprises from 75 % to 86 % by weight solids on a dry basis.

10. A process as claimed in any one of Claims 1 to 9 characterized in that the fabric substrate is a tufted carpet and the other fabric layer is a secondary backing.

## Revendications

1. Procédé pour la fabrication d'un stratifié textile dans lequel on applique un mélange moussé d'un latex ou d'une dispersion d'un polymère ou d'un copolymère qui contient éventuellement des épaississants en plus des charges et des adjuvants usuels, sur la surface d'un substrat textile, caractérisé en ce qu'on introduit de l'air et un mélange de basse viscosité contenant un latex ou une dispersion d'un polymère ou copolymère naturel ou synthétique y compris éventuellement d'autres adjuvants, dans une zone à haute vitesse de mélange en faisant mousser le mélange avec de l'air, en ce qu'on injecte une émulsion d'un épaississant polymère en augmentant la viscosité du mélange de basse viscosité dans la zone de mélange en une quantité réglable, en ce qu'on contrôle la viscosité élevée de la mousse formée quittant la zone de mélange et en ce qu'on applique la mousse obtenue sur un côté d'un substrat tissé qui est ensuite stratifié avec une autre couche d'un matériau tissé en utilisant ledit mélange.

2. Procédé suivant la revendication 1, caractérisé en ce qu'on fait varier la quantité d'émulsion d'épaississant injectée dans la zone de mélange pendant le procédé afin de modifier la viscosité de la mousse obtenue.

3. Procédé suivant les revendications 1 et 2, caractérisé en ce qu'on utilise un latex aqueux d'un copolymère élastomère ou flexible ayant des groupes polaires ou réactifs dans la chaîne polymère en tant que mélange de basse viscosité.

4. Procédé suivant les revendications 1 à 3, caractérisé en ce qu'on utilise, en tant qu'émulsion d'épaississant, une émulsion d'épaississant présentant une viscosité relativement basse à un pH inférieur à 7, émulsion dont la viscosité augmente rapidement pour des pH supérieurs à 7.

5. Procédé suivant les revendications 1 à 4, caractérisé en ce qu'on utilise un mélange de basse viscosité dans un intervalle de pH de 7,5 à 10,5.

6. Procédé suivant les revendications 1 à 5, caractérisé en ce qu'on utilise en tant que mélange de basse viscosité un copolymère aqueux de butadiène/styrène ayant une viscosité de 1,0 à 12,0 Pa · s.

7. Procédé suivant les revendications 1 à 6, caractérisé en ce qu'on utilise en tant qu'émulsion d'épaississant un latex d'un copolymère d'un acide carboxylique insaturé avec d'autres monomères copolymérisables.

8. Procédé suivant les revendications 1 à 7, caractérisé en ce que le mélange de basse viscosité contient une charge et/ou un diluant en une quantité allant jusqu'à 800 parties en poids pour 100 parties en poids de polymère ou de copolymère (par rapport à la substance sèche).

9. Procédé suivant la revendication 8, caractérisé en ce que le mélange de basse viscosité contient 76 à 86 % en poids de substances solides (par rapport à la substance sèche).

10. Procédé suivant les revendications 1 à 9, caractérisé en ce qu'on utilise en tant que substrat tissé un tapis de tufting et en tant qu'autre couche tissée un deuxième dossier.